# EUROPÄISCHE PATENTSCHRIFT

(11) **EP 1 662 108 B1**
(45) Veröffentlichungstag und Bekanntmachung des Hinweises auf die Patenterteilung: **03.10.2007**
(21) Anmeldenummer: 05108710.4
(22) Anmeldetag: 21.09.2005
(51) Int. Cl.: F01N 3/20

(54) **Abgasanlage**
Exhaust system
Système d'échappement

(30) Priorität: 24.11.2004 DE 102004056791
(43) Veröffentlichungstag der Anmeldung: 31.05.2006
(73) Patentinhaber: J. Eberspächer GmbH & Co. KG, 73730 Esslingen (DE)
(72) Erfinder: Hanitzsch, Robert, 71394 Kernen (DE); Rudelt, Josef, 73773, Aichwald (DE)
(74) Vertreter: Patentanwalts-Partnerschaft Rotermund + Pfusch + Bernhard

(56) Entgegenhaltungen:
- US-B1- 6 192 677
- US-B1- 6 513 323
- US-B1- 6 539 708
- PATENT ABSTRACTS OF JAPAN Bd. 1997, Nr. 08, 29. August 1997 (1997-08-29) -& JP 09 096212 A (MITSUBISHI MOTORS CORP), 8. April 1997 (1997-04-08)

## Beschreibung

Die vorliegende Erfindung betrifft eine Abgasanlage für eine Brennkraftmaschine, insbesondere in einem Kraftfahrzeug, mit den Merkmalen des Oberbegriffs des Anspruchs 1.

Eine derartige Abgasanlage umfasst üblicherweise einen Abgasstrang, der Abgase von der Brennkraftmaschine wegführt. Bei bestimmten Anwendungen kann es erforderlich sein, zusätzlich Kraftstoff in den Abgasstrang einzudüsen. Beispielsweise kann die Eindüsung von solchem Sekundärkraftstoff stromauf eines Oxidationskatalysators die Abgastemperatur stark anheben, beispielsweise um die Regeneration eines Partikelfilters anzustoßen. Für die Eindüsung von Kraftstoff in den Kraftstoffstrang kann die Abgasanlage mit wenigstens einer Einspritzdüse ausgestattet sein, die über eine geeignete Haltevorrichtung am Abgasstrang befestigt ist. Grundsätzlich kann es sich bei einer derartigen Einspritzdüse um eine solche handeln, die an sich für die Einspritzung von Kraftstoff in die Brennräume der Brennkraftmaschine bekannt ist.

Beispielsweise ist aus der JP 09-096212 A eine Abgasanlage mit einem Abgasstrang bekannt, der mit einer Einspritzdüse zum Einspritzen von Kraftstoff in den Abgasstrang ausgestattet ist. Dabei ist die Einspritzdüse über eine Haltevorrichtung am Abgasstrang befestigt, die einen Aufnahmekörper aufweist, in den die Einspritzdüse eingesetzt ist. Ferner ist der Aufnahmekörper über einen scheibenförmigen Flansch am Abgasstrang befestigt.

Problematisch ist hierbei, dass am bzw. im Abgasstrang vergleichsweise hohe Temperaturen auftreten können, während gleichzeitig die Einspritzdüse eine bestimmte maximal zulässige Betriebstemperatur nicht überschreiten darf. Grundsätzlich ist es möglich, die Einspritzdüse aktiv zu kühlen, um auf diese Weise eine Überhitzung der Einspritzdüse zu vermeiden.

Die vorliegende Erfindung beschäftigt sich mit dem Problem, für eine Abgasanlage der eingangs genannten Art eine verbesserte Ausführungsform anzugeben, bei der insbesondere die Einspritzdüse einen verbesserten Schutz vor Überhitzung aufweist.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Wärmeübertragung vom Abgasstrang auf die Einspritzdüse zu reduzieren. Erreicht wird dies zum einen dadurch, dass ein Flansch, über den ein Aufnahmekörper, in den die Einspritzdüse eingesetzt ist, am Abgasstrang befestigt ist, über eine Querschnittseinschnürung an besagtem Aufnahmekörper angebracht ist, und zum andern dadurch, dass besagter Flansch über einen thermischen Isolator am Abgasstrang angebracht ist. Dabei können beide Maßnahmen kumulativ oder alternativ zur Anwendung kommen. Der thermische Isolator behindert den Wärmeübergang vom heißen Abgasstrang auf den Flansch. Desweiteren hemmt die Querschnittseinschnürung die Wärmeübertragung vom Flansch auf den Aufnahmekörper. Durch die aufgezeigten, erfindungsgemäßen Maßnahmen kann jeweils der Wärmestrom zur Einspritzdüse, die sich im Aufnahmekörper befindet, reduziert werden. Auf diese Weise können beispielsweise aktive oder passive Kühlmaßnahmen die Wärme besser abführen, wodurch die Gefahr einer Überhitzung der Einspritzdüse reduziert ist.

Gemäß einer vorteilhaften Ausführungsform kann in den Aufnahmekörper ein Kühlkanal integriert sein, der sich koaxial zu einer Längsachse der Einspritzdüse ringförmig erstreckt. Dabei ist dieser Kühlkanal im Aufnahmekörper so angeordnet, dass er einen Aufnahmeabschnitt des Aufnahmekörpers umhüllt, in dem sich ein Düsenabschnitt der Einspritzdüse erstreckt, der wenigstens ein Spritzloch zum Eindüsen des Kraftstoffs aufweist. Auf diese Weise kann mit Hilfe des aktiv gekühlten Aufnahmekörpers der Bereich der Einspritzdüse, nämlich besagter Düsenabschnitt, welcher im Betrieb der größten thermischen Belastung ausgesetzt ist, besonders intensiv gekühlt und somit vor Überhitzung geschützt werden.

Gemäß einer vorteilhaften Ausführungsform kann der Aufnahmekörper an einer vom Flansch abgewandten Seite eine Spannhülse aufweisen, welche die Einspritzdüse zumindest teilweise koaxial zu deren Längsachse umhüllt und welche an einem vom Flansch abgewandten Endabschnitt einen Spannkörper trägt, der die Einspritzdüse axial gegen den Aufnahmekörper verspannt. Durch diese Bauweise wird zum einen die Fixierung der Einspritzdüse am Aufnahmekörper besonders einfach sichergestellt. Zum andern wird durch die Einspannung der Einspritzdüse bei axialen Kontaktflächen zwischen Einspritzdüse und Aufnahmekörper eine vorgespannte Anlage erreicht, was den Wärmeübergang unterstützt und dadurch die Kühlwirkung des vorzugsweise aktiv gekühlten Aufnahmekörpers verbessert.

Bei einer vorteilhaften Weiterbildung kann sich der Spannkörper axial an einem Anschlusselement abstützen, das sich seinerseits an der Einspritzdüse axial abstützt und das an eine Kraftstoffversorgung angeschlossen ist. Dieses Anschlusselement bildet somit den Anschluss der Einspritzdüse an die Kraftstoffversorgung und wird hier in die Fixierung der Einspritzdüse eingebunden, derart, dass mit dem Spannkörper sowohl das Anschlusselement an der Einspritzdüse als auch die Einspritzdüse im Aufnahmekörper fixiert werden kann.

Eine besonders kompakte Bauform ergibt sich, wenn der Spannkörper hülsenförmig ausgestaltet und koaxial zur Längsachse der Einspritzdüse ausgerichtet wird und dabei die Kraftstoffversorgung durch den Spannkörper hindurch an das Anschlusselement axial angeschlossen wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiel der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: einen Längsschnitt durch einen Abschnitt einer Abgasanlage, in dem eine Einspritzdüse angeordnet ist,
- Fig. 2: einen Querschnitt durch einen Aufnahmekörper im Bereich eines Kühlkanals entsprechend Schnittlinien II in Fig. 1.

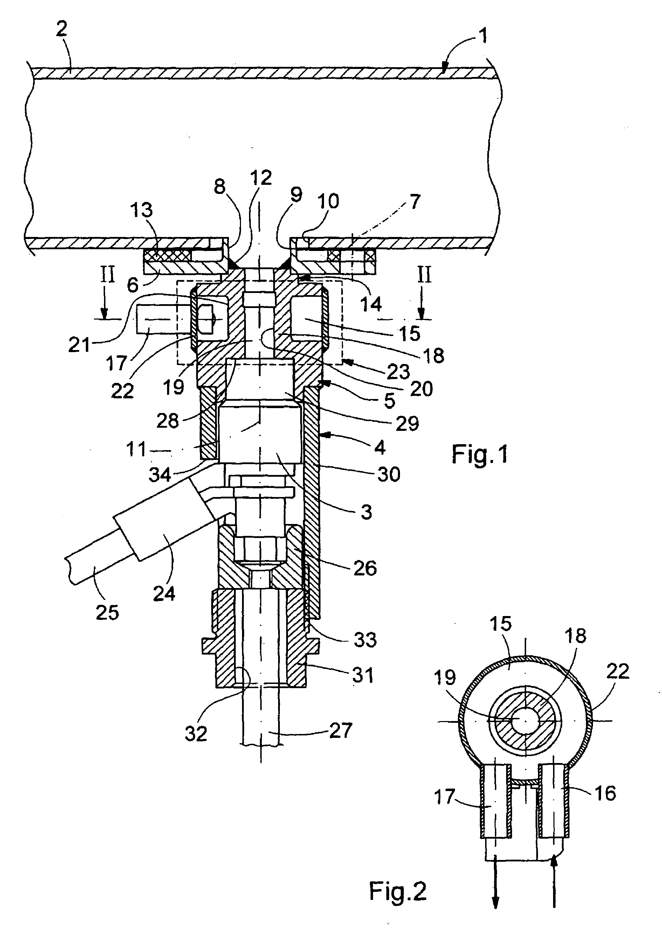

Entsprechend Fig. 1 besitzt eine Abgasanlage 1 einer hier nicht gezeigten Brennkraftmaschine, die insbesondere in einem Kraftfahrzeug angeordnet sein kann, einen Abgasstrang 2, der die im Betrieb der Brennkraftmaschine entstehenden Abgase von der Brennkraftmaschine wegführt. Dementsprechend ist der Abgasstrang 2 in der Regel ein Rohr oder dergleichen, von dem hier nur ein kleiner Ausschnitt gezeigt ist.

Die Abgasanlage 1 ist außerdem mit wenigstens einer Einspritzdüse 3 ausgestattet, mit deren Hilfe Kraftstoff in den Abgasstrang 2 eingespritzt werden kann. Eine derartige Kraftstoffeinspritzung kann - sofern sie stromauf eines Oxidationskatalysators erfolgt - zur Erhöhung der Abgastemperatur durchgeführt werden, beispielsweise um einen NOX-Speicherkatalysator zu regenerieren oder zu desultfatisieren.

Die Einspritzdüse 3 ist über eine Haltevorrichtung 4 am Abgasstrang 2 befestigt. Die Haltevorrichtung 4 umfasst einen Aufnahmekörper 5 sowie einen Flansch 6, über den der Aufnahmekörper 5 am Abgasstrang 2 befestigt ist. Zu diesem Zweck ist der Flansch 6 scheibenförmig gestaltet und beispielsweise über mehrere Verschraubungen 7 am Abgasstrang 2 festgelegt. Der Flansch 6 besitzt eine Zentralöffnung 8 und ist außerdem mit einer Hülse 9 ausgestattet, welche die Zentralöffnung 8 einfasst. Die Hülse 9 ist dabei an einer vom Aufnahmekörper 5 abgewandten Seite angeordnet und steht an dieser Seite vom Flansch 6 ab. Die Hülse 9 ragt dabei in eine Öffnung 10 hinein, die am Abgasstrang 2 ausgebildet ist und durch die hindurch die Eindüsung des Kraftstoffs in den Abgasstrang 2 erfolgen soll. Der Flansch 6 ist bezüglich einer Längsmittelachse 11 der Einspritzdüse 3 koaxial angeordnet. Desweiteren ist der Flansch 6 im Bereich seiner Zentralöffnung 8 mit dem Aufnahmekörper 5 verbunden. Erreicht wird dies hier durch einen stirnseitig am Aufnahmekörper 5 ausgebildeten Stutzenabschnitt, der in die Zentralöffnung 8 eingesteckt ist. Zur Fixierung des Flansches 6 am Aufnahmekörper 5 ist hier eine Schweißverbindung 12, z.B. in Form einer Kehlnaht, ausgebildet.

Um den Wärmeübergang vom Abgasstrang 2 auf die Einspritzdüse 3 zu reduzieren, ist der Flansch 6 über einen thermischen Isolator 13 am Abgasstrang 2 angebracht. Der thermische Isolator 13 ist hier als Ringscheibe ausgestaltet sowie gleichzeitig als Dichtung. Auf diese Weise wird ein Austritt der im Abgasstrang 2 transportierten Abgase durch die Öffnung 10 in die Umgebung des Abgasstrangs 2 vermieden. Durch die Zwischenschaltung des Isolators 13 zwischen den Flansch 6 und den Abgasstrang 2 kann der Wärmeübergang vom Abgasstrang 2 auf den Flansch 6 reduziert werden. Wichtig ist dabei, dass der Flansch 6 keinen direkten körperlichen Kontakt mit dem Abgasstrang 2 aufweist. Insbesondere ist zu diesem Zweck der lichte Querschnitt der Öffnung 10 größer gewählt als der Au-ßenquerschnitt der Hülse 9.

Zusätzlich oder alternativ zu dieser Maßnahme ist der Flansch 6 über eine Querschnittseinschnürung 14 am Anschlusskörper 5 angebracht. Durch diese Querschnittseinschnürung 14, die hier am Anschlusskörper 5 ausgebildet ist, grundsätzlich aber auch am Flansch 6 ausgebildet sein kann, wird ebenfalls der Wärmeübergang gehemmt, und zwar hier vom Flansch 6 zum Aufnahmekörper 6.

Die Einschnürung 14 ist dadurch charakterisiert, dass beiderseits der Einschnürung 14 größere Querschnitte auftreten, also einerseits am Flansch 6 und andererseits am Aufnahmekörper 5. Im Bereich der Einschnürung 14 besteht somit ein Ringspalt, der quasi wie eine Luftspaltisolierung wirkt.

Es ist klar, dass die vorstehend genannten Maßnahmen, nämlich der Isolator 13 und die Querschnittseinschnürung 14, vorzugsweise wie hier kumulativ zur Anwendung kommen.

Durch die genannten Maßnahmen wird die Erwärmung des Aufnahmekörpers 5 gehemmt. Zusätzlich wird hier mittels einer aktiven Kühlung die Wärme vom Aufnahmekörper 5 abgeführt. Zu diesem Zweck ist in den Aufnahmekörper 5 ein ringförmiger Kühlkanal 15 integriert, der koaxial zur Längsmittelachse 11 der Einspritzdüse 3 ausgerichtet ist. Entsprechend Fig. 2 erstreckt sich dieser Kühlkanal 15 ringförmig geschlossen und ist außerdem an einen Vorlaufanschluss 16 sowie an einen Rücklaufanschluss 17 angeschlossen, über welche der Kühlkanal 15 mit einem Kühlmedium beaufschlagt werden kann.

Wie aus Fig. 1 hervorgeht, umhüllt der Kühlkanal 15 einen Aufnahmeabschnitt 18 des Aufnahmekörpers 5 koaxial. Dieser Aufnahmeabschnitt 18 dient zur Aufnahme eines Düsenabschnitts 19, der wenigstens ein hier nicht gezeigtes Spritzloch zum Eindüsen des Kraftstoffs aufweist. Dieser Düsenabschnitt 19 ist an seinem axialen Ende bündig zum axialen Ende des Aufnahmekörpers 5 angeordnet. Dementsprechend ist dieser Düsenabschnitt 19 an seinem dem Abgasstrang 2 zugewandten Ende einer vergleichsweise hohen thermischen Belastung ausgesetzt. Vorzugsweise ist dieser Düsenabschnitt 19 in eine Bohrung 20 des Aufnahmeabschnitts 18 so eingepasst, dass sich eine möglichst flächige Kontaktierung zwischen Düsenabschnitt 19 und Aufnahmeabschnitt 18 ergibt. Auf diese Weise kann eine intensive Wärmeübertragung zwischen Düsenabschnitt 19 und Aufnahmeabschnitt 18 erzielt werden. D.h., die in den Düsenabschnitt 19 aus dem Abgasstrang 2 eingebrachte Wärme wird an den Aufnahmekörper 5 abgegeben und durch den Kühlkanal 15 bzw. das darin strömende Kühlmedium abgeführt.

Der Kühlkanal 15 ist im Aufnahmekörper 5 hier vorteilhaft dadurch hergestellt, dass der Kühlkörper 5 radial außen mit einer Ringnut 21 ausgestattet ist, die radial außen durch eine Hülse 22 verschlossen ist. Diese Hülse 22 ist am Aufnahmekörper 5 befestigt, z.B. mittels umlaufender Schweißnähte, und ist hierzu außen auf den Aufnahmekörper 5 aufgeschoben bzw. übergestülpt. Zusätzlich enthält diese Verschlusshülse 22 nicht näher bezeichnete Öffnungen für den Vorlauf und den Rücklauf, in welche die jeweiligen Anschlüsse 16 und 17 eingesetzt sind (vgl. hierzu insbesondere Fig. 2).

Um besonders günstige Wärmeübertragungseigenschaften zu erhalten sowie zum Schutz vor Korrosion sind in einem durch eine unterbrochene Linie angedeuteten Bereich 23 die dort angeordneten Teile vorzugsweise aus Edelstahl gefertigt.

Die Einspritzdüse 3 besitzt einen elektrischen Anschluss 24, der bezüglich der Längsmittelachse 11 radial oder zumindest mit einer radialen Komponente absteht. Über diesen Anschluss 24 kann über eine entsprechende Betätigungsleitung 25 die Einspritzdüse 3 zum Einspritzen von Kraftstoff betätigt werden. Desweiteren ist die Einspritzdüse 3 mit einem Anschlusselement 26 ausgestattet, mit dessen Hilfe die Einspritzdüse 3 an eine hier nur schematisch skizzierte Kraftstoffversorgung 27 angeschlossen ist.

Wichtig für eine hohe Kühlleistung ist ein intensiver körperlicher Kontakt zwischen der Einspritzdüse 3 und dem Aufnahmekörper 5. Hierzu ist im Aufnahmekörper 5 ein Sitz 28 ausgebildet, der eine vergleichsweise große Kontaktfläche zwischen Einspritzdüse 3 und Aufnahmekörper 5 realisiert. Desweiteren kann die Einspritzdüse 3 in einem Abschnitt 29, der in den Aufnahmekörper 5 hineinragt, so in den Aufnahmekörper 5 eingepasst sein, dass sich auch hier eine möglichst flächige Kontaktierung zwischen Einspritzdüse 3 und Aufnahmekörper 5 ausbildet.

Der Sitz 28 ist axial orientiert. Zur Verbesserung der Wärmeübertragung zwischen Einspritzdüse 3 und Aufnahmekörper 5 in diesem axialen Sitz 28 kann die Einspritzdüse 3 axial in den Sitz 28 eingedrückt werden. Zu diesem Zweck weist der Aufnahmekörper 5 eine Spannhülse 30 auf, und zwar an einer vom Flansch 6 abgewandeten Seite. Die Spannhülse 30 ist koaxial zur Längsmittelachse 11 angeordnet und umhüllt, zumindest teilweise, die Einspritzdüse 3. Desweiteren weist die Spannhülse 30 an einem vom Flansch 6 abgewandten Endabschnitt einen Spannkörper 31 auf. Dieser Spannkörper 31 bewirkt nun eine axiale Verspannung der Einspritzdüse 3 gegen den Aufnahmekörper 5. Mit anderen Worten, der Spannkörper 31 leitet in die Einspritzdüse 3 eine Axialkraft ein, welche die Einspritzdüse 3 in ihren Sitz 28 axial hineinpresst.

Grundsätzlich kann sich der Spannkörper 31 hierzu direkt an der Einspritzdüse 3 axial abstützen. Bei der hier gezeigten, bevorzugten Ausführungsform stützt sich der Spannkörper 31 axial am Anschlusselement 26 ab, das seinerseits axial an der Einspritzdüse 3 abgestützt ist. Dementsprechend stützt sich der Spannkörper 31 hier indirekt über das Anschlusselement 26 an der Einspritzdüse 3 ab. Auf diese Weise können mit nur einem einzigen Spannkörper 31 sowohl das Anschlusselement 26 als auch die Einspritzdüse 3 aneinander und am Anschlusskörper 5 bzw. an der Haltevorrichtung 4 fixiert werden. Vorzugsweise ist der Spannkörper 31 wie hier hülsenförmig ausgestaltet, so dass er eine zentrale Durchgangsöffnung 32 besitzt. Durch diese Durchgangsöffnung 32 hindurch ist nun das Anschlusselement 26 an die Kraftstoffversorgung 27 angeschlossen.

Im einfachsten Fall kann der Spannkörper 31 mit der Spannhülse 30 verschweißt werden, beispielsweise mittels Schweißpunkten. Bevorzugt wird die hier gezeigte Ausführungsform, bei welcher der Spannkörper 31 über eine Gewindeverbindung 33 an der Spannhülse 30 befestigt ist. Dementsprechend besitzt der Spannkörper 31 ein Außengewinde und ist in ein an der Spannhülse 30 ausgebildetes Innengewinde eingeschraubt.

Um die Einspritzdüse 3 einschließlich ihres elektrischen Anschlusses 24 in die Spannhülse 30 einsetzen zu können, ist die Spannhülse 30 mit einer Aussparung 34 versehen, die im Bereich des Spannkörpers 31 axial offen ist und durch die der elektrische Anschluss 24 hindurchragen kann.

Die Spannhülse 30 ist hier an den Aufnahmekörper 5 angeschweißt. Ebenso ist es möglich, die Spannhülse 30 einstückig am Aufnahmekörper 5 auszubilden.

Bei der hier gezeigten Schraublösung für die Fixierung des Spannkörpers 31 ergibt sich außerdem der Vorteil, dass der Spannkörper 31 zur Gewichtseinsparung aus einem Leichtmetall, z.B. aus Aluminium, hergestellt werden kann.

## Patentansprüche

1. Abgasanlage für eine Brennkraftmaschine, insbesondere in einem Kraftfahrzeug,
- mit einem Abgas von der Brennkraftmaschine wegführenden Abgasstrang (2),
- mit wenigstens einer Einspritzdüse (3) zum Einspritzen von Kraftstoff in den Abgasstrang (2),
- wobei die Einspritzdüse (3) über eine Haltevorrichtung (4) am Abgasstrang (2) befestigt ist,
- wobei die Haltevorrichtung (4) einen Aufnahmekörper (5) aufweist, in den die Einspritzdüse (3) eingesetzt ist,
- wobei der Aufnahmekörper (5) über einen scheibenförmigen Flansch (6) am Abgasstrang (2) befestigt ist,
**dadurch gekennzeichnet,**
**dass** der Flansch (6) über eine Querschnittseinschnürung (14) am Aufnahmekörper (5) und/oder über einen thermischen Isolator (13) am Abgasstrang (2) angebracht ist.

2. Abgasanlage nach Anspruch 1,
**dadurch gekennzeichnet,**
**dass** der Flansch (6) koaxial zu einer Längsmittelachse (11) der Einspritzdüse (3) ausgerichtet ist und eine Zentralöffnung (8) aufweist, durch die hindurch die Einspritzdüse (3) den Kraftstoff in den Abgasstrang (2) eindüst.

3. Abgasanlage nach Anspruch 2,
**dadurch gekennzeichnet,**
**dass** der Flansch (6) an einer vom Aufnahmekörper (5) abgewandten Seite eine die Zentralöffnung (8) einfassende Hülse (9) aufweist.

4. Abgasanlage nach einem der Ansprüche 1 bis 3,
**dadurch gekennzeichnet,**
**dass** der Isolator (13) als Ringscheibe ausgestaltet ist.

5. Abgasanlage nach einem der Ansprüche 1 bis 4,
**dadurch gekennzeichnet,**
**dass** die Isolator (13) als Dichtung ausgestaltet ist.

6. Abgasanlage nach einem der Ansprüche 1 bis 5,
**dadurch gekennzeichnet,**
**dass** die Querschnittseinschnürung (14) am Aufnahmekörper (5) ausgebildet ist.

7. Abgasanlage nach einem der Ansprüche 1 bis 6,
**dadurch gekennzeichnet,**
- **dass** in den Aufnahmekörper (5) ein koaxial zu einer Längsmittelachse (11) der Einspritzdüse (3) ausgerichteter, ringförmiger Kühlkanal (15) integriert ist,
- **dass** der Aufnahmekörper (5) einen Vorlaufanschluss (16) und einen Rücklaufanschluss (17) für ein den Kühlkanal (15) durchströmendes Kühlmedium aufweist.

8. Abgasanlage nach Anspruch 7,
**dadurch gekennzeichnet,**
**dass** der Kühlkanal (15) einen Aufnahmeabschnitt (18) des Aufnahmekörpers (5) umhüllt, in dem sich ein Düsenabschnitt (19) der Einspritzdüse (3) erstreckt, der wenigstens ein Spritzloch zum Eindüsen des Kraftstoffs aufweist.

9. Abgasanlage nach Anspruch 7 oder 8,
**dadurch gekennzeichnet, dass** der Kühlkanal (15) durch eine außen am Aufnahmekörper (5) ausgebildete Ringnut (21) gebildet ist, die durch eine übergestülpte und am Aufnahmekörper (5) befestigte Hülse (22) verschlossen ist, welche Öffnungen für den Vorlauf und den Rücklauf aufweist.

10. Abgasanlage nach einem der Ansprüche 1 bis 9,
**dadurch gekennzeichnet,**
**dass** der Aufnahmekörper (5) an einer vom Flansch (6) abgewandten Seite eine Spannhülse (30) aufweist, welche die Einspritzdüse (3) zumindest teilweise koaxial zu deren Längsmittelachse (11) umhüllt und welche an einem vom Flansch (6) abgewandten Endabschnitt einen Spannkörper (31) trägt, der die Einspritzdüse (3) axial gegen den Aufnahmekörper (5) verspannt.

11. Abgasanlage nach Anspruch 10,
**dadurch gekennzeichnet,**
**dass** sich der Spannkörper (31) axial an einem Anschlusselement (26) abstützt, das sich seinerseits an der Einspritzdüse (3) axial abstützt und das an eine Kraftstoffversorgung (27) angeschlossen ist.

12. Abgasanlage nach Anspruch 11,
**dadurch gekennzeichnet,**
- **dass** der Spannkörper (31) hülsenförmig ausgestaltet und koaxial zur Längsmittelachse (11) der Einspritzdüse (3) ausgerichtet ist,
- **dass** die Kraftstoffversorgung (27) durch den Spannkörper (31) hindurch an das Anschlusselement (26) axial angeschlossen ist.

13. Abgasanlage nach einem der Ansprüche 10 bis 12,
**dadurch gekennzeichnet,**
- **dass** der Spannkörper (31) mit der Spannhülse (30) verschweißt ist, oder
- **dass** der Spannkörper (31) in ein an der Spannhülse (30) ausgebildetes Gewinde eingeschraubt ist.

14. Abgasanlage nach einem der Ansprüche 10 bis 13,
**dadurch gekennzeichnet,**
**dass** die Spannhülse (30) eine am vom Flansch (6) abgewandten Endabschnitt axial offene Aussparung (34) aufweist, durch die ein elektrischer Anschluss (24) der Einspritzdüse (3) hindurchragt.

## Claims

1. An exhaust system for an internal combustion engine, in particular in a motor vehicle,
- having an exhaust line (2) carrying exhaust away from the internal combustion engine,
- having at least one fuel injector (3) for injecting fuel into the exhaust line (2),
- wherein the fuel injector (3) is mounted on the exhaust line (2) by a mounting device (4),
- wherein the mounting device (4) has a receiving body (5) into which the fuel injector (3) is inserted,
- wherein the receiving body (5) is mounted on the exhaust line (2) via a disk-shaped flange (6),
**characterized in that**
the flange (6) is mounted on the receiving body (5) via a constriction (14) in the cross section and/or is mounted on the exhaust line (2) via a thermal insulator (13).

2. The exhaust system according to Claim 1,
**characterized in that**
the flange (6) is aligned coaxially with a central longitudinal axis (11) of the fuel injector and has a central opening (8) through which the fuel injector (3) injects fuel into the exhaust line (2).

3. The exhaust system according to Claim 2,
**characterized in that**
the flange (6) has a sleeve (9) encompassing the central opening (8) on a side facing away from the receiving body (5).

4. The exhaust system according to any one of Claims 1 through 3,
**characterized in that**
the insulator (13) is designed as a ring disk.

5. The exhaust system according to any one of Claims 1 through 4,
**characterized in that**
the insulator (13) is designed as a gasket.

6. The exhaust system according to any one of Claims 1 through 5,
**characterized in that**
the constriction (14) in the cross section is designed on the receiving body (5).

7. The exhaust system according to any one of Claims 1 through 6,
**characterized in that**
- a ring-shaped cooling channel (15) aligned coaxially with a central longitudinal axis (11) of the fuel injector (3) is integrated into the receiving body (5),
- the receiving body (5) has a forward flow connection (16) and a return flow connection (17) for a cooling medium that flows through the cooling channel (15).

8. The exhaust system according to Claim 7,
**characterized in that**
the cooling channel (15) surrounds a receiving section (18) of the receiving body (5) in which a nozzle section (19) of the fuel injector (3) extends, having at least one injector hole for injecting fuel.

9. The exhaust system according to Claim 7 or 8,
**characterized in that**
the cooling channel (15) is formed by a ring groove (21) which is provided on the outside of the receiving body (5) and is sealed by a sleeve (22) inverted over and attached to the receiving body (5) and having openings for the forward flow and the return flow.

10. The exhaust system according to any one of Claims 1 through 9,
**characterized in that**
the receiving body (5) has a tension sleeve (30) on a side facing away from the flange (6), said tension sleeve surrounding the fuel injector (3) at least partially coaxially with the central longitudinal axis (11) thereof and having a tension body (31) on an end section facing away from the flange (6), said tension body pressing the fuel injector (3) axially with tension against the receiving body (5).

11. The exhaust system according to Claim 10,
**characterized in that**
the tension body (31) is supported axially on a connecting element (26) which is in turn supported axially on the fuel injector (3) and is connected to a fuel supply (27).

12. The exhaust system according to Claim 11,
**characterized in that**
- the tension body (31) is designed in a sleeve shape and is aligned coaxially with the central longitudinal axis (11) of the fuel injector (3),
- the fuel supply (27) is connected axially to the connecting element (26) through the tension body (31).

13. The exhaust system according to any one of Claims 10 through 12,
**characterized in that**
- the tension body (31) is welded to the tension sleeve (30), or
- the tension body (31) is screwed into a thread formed on the tension sleeve (30).

14. The exhaust system according to any one of Claims 10 through 13,
**characterized in that**
the tension sleeve (30) has a recess (34) that is open axially on the end section facing away from the flange (6), an electric connection (24) of the fuel injector (3) passing through said recess.

## Revendications

1. Système d'échappement pour un moteur à combustion interne, en particulier dans un véhicule automobile, comprenant :
- une branche de gaz brûlés (2) évacuant les gaz brûlés du moteur à combustion interne,
- au moins une buse d'injection (3) pour l'injection de carburant dans la branche de gaz brûlés (2),
- la buse d'injection (3) étant fixée au moyen d'un dispositif de retenue (4) sur la branche de gaz brûlés (2),
- le dispositif de retenue (4) présentant un corps de réception (5) dans lequel est insérée la buse d'injection (3),
- le corps de réception (5) étant fixé au moyen d'une bride (6) en forme de disque sur la branche de gaz brûlés (2),
**caractérisé en ce que**
la bride (6) est placée au moyen d'un rétrécissement de section (14) sur le corps de réception (5) et/ou au moyen d'un isolateur (13) thermique sur la branche de gaz brûlés (2).

2. Système d'échappement selon la revendication 1,
**caractérisé en ce que**
la bride (6) est orientée sur le même axe qu'un axe médian longitudinal (11) de la buse d'injection (3) et présente une ouverture centrale (8), à travers laquelle la buse d'injection (3) injecte le carburant dans la branche de gaz brûlés (2).

3. Système d'échappement selon la revendication 2,
**caractérisé en ce que**
la bride (6) présente une douille (9) entourant l'ouverture centrale (8) sur un côté opposé au corps de réception (5).

4. Système d'échappement selon l'une quelconque des revendications 1 à 3,
**caractérisé en ce que**
l'isolateur (13) est conçu comme un disque annulaire.

5. Système d'échappement selon l'une quelconque des revendications 1 à 4,
**caractérisé en ce que**
l'isolateur (13) est conçu comme joint.

6. Système d'échappement selon l'une quelconque des revendications 1 à 5,
**caractérisé en ce que**
le rétrécissement de section (14) est réalisé sur le corps de réception (5).

7. Système d'échappement selon l'une quelconque des revendications 1 à 6,
**caractérisé en ce**
- **qu'**un canal de refroidissement (15) de forme annulaire, orienté sur le même axe qu'un axe médian longitudinal (11) de la buse d'injection (3) est intégré dans le corps de réception (5),
- en ce que le corps de réception (5) présente un raccordement aller (16) et un raccordement retour (17) pour un agent de refroidissement traversant le canal de refroidissement (15).

8. Système d'échappement selon la revendication 7,
**caractérisé en ce que**
le canal de refroidissement (15) enveloppe une partie de réception (18) du corps de réception (5), dans lequel s'étend une partie de buse (19) de la buse d'injection (3), qui présente au moins un trou d'injection pour l'injection du carburant.

9. Système d'échappement selon la revendication 7 ou 8,
**caractérisé en ce que**
le canal de refroidissement (15) est formé par une rainure annulaire (21) réalisée à l'extérieur sur le corps de réception (5), qui est fermée par une douille (22) rabattue dessus et fixée sur le corps de réception (5), qui présente des ouvertures pour l'aller et le retour.

10. Système d'échappement selon l'une quelconque des revendications 1 à 9,
**caractérisé en ce que**
le corps de réception (5) présente sur un côté opposé à la bride (6) une douille de serrage (30), qui enveloppe la buse d'injection (3) au moins partiellement sur le même axe que son axe médian longitudinal (11) et qui porte sur une partie d'extrémité opposée à la bride (6) un corps de serrage (31), qui tend la buse d'injection (3) axialement contre le corps de réception (5).

11. Système d'échappement selon la revendication 10,
**caractérisé en ce que**
le corps de serrage (31) s'appuie axialement sur un élément de raccordement (26), qui s'appuie pour sa part axialement sur la buse d'injection (3) et qui est raccordé à une alimentation en carburant (27).

12. Système d'échappement selon la revendication 11,
**caractérisé en ce que**
- le corps de serrage (31) est conçu en forme de douille et est orienté sur le même axe que l'axe médian longitudinal (11) de la buse d'injection (3) ,
- l'alimentation en carburant (27) est raccordée axialement à travers le corps de serrage (31) à l'élément de raccordement (26).

13. Système d'échappement selon l'une quelconque des revendications 10 à 12,
**caractérisé en ce que**
- le corps de serrage (31) est soudé avec la douille de serrage (30), ou
- le corps de serrage (31) est vissé dans un filetage réalisé sur la douille de serrage (30).

14. Système d'échappement selon l'une quelconque des revendications 10 à 13,
**caractérisé en ce que**
la douille de serrage (30) présente un évidement (34) ouvert axialement sur la partie d'extrémité opposée à la bride (6), évidement par lequel dépasse un raccordement (24) électrique de la buse d'injection (3).
